# EUROPEAN PATENT APPLICATION

(11) **EP 3 683 736 A1**
(43) Date of publication of application: **22.07.2020**
(21) Application number: 20150943.7
(22) Date of filing: 09.01.2020
(51) Int. Cl.: G06N 3/08, G06N 3/04, H04L 29/06

(54) **MACHINE LEARNING METHOD, MACHINE LEARNING PROGRAM, AND MACHINE LEARNING APPARATUS**

(30) Priority: 18.01.2019 JP 2019007311
(71) Applicant: FUJITSU LIMITED, Kanagawa 211-8588 (JP)
(72) Inventor: Nishino, Takuya, Kanagawa, 211-8588 (JP)
(74) Representative: Hoffmann Eitle

(57) **Abstract**

A computer-implemented machine learning method of a machine learning model includes: performing(S1) first training of the machine learning model by using pieces of training data associated with a correct label; determining(S3,S4), from the pieces of training data, a set of pieces of training data that are close to each other in a feature space based on a core tensor generated by the trained machine learning model and have a same correct label; generating(S6) extended training data based on the determined set of pieces of training data; and performing(S7) second training of the trained machine learning model by using the generated extended training data.

## Description

### FIELD

The embodiments discussed herein are related to machine learning technology.

### BACKGROUND

Conventionally, classification of various pieces of information has been performed by using a learning model such as a neural network, which has learned information with training data. For example, in a campaign analysis in the field of information security, training of a learning model is performed by using a communication log having a correct label attached thereto, where the correct label indicates legitimacy or illegitimacy as training data. Thereafter, by using the communication log as a learner after training, the presence or absence of cyberattacks is classified by the communication log in the network.

In the field of information security, it is difficult to collect communication logs at the time of being attacked. Therefore, the number of illegitimate communication logs used as training data becomes very small with respect to the number of legitimate communication logs. As a conventional technique of resolving such a deviation of the correct label in the training data, there has been known a method that an appropriate variable is allocated and added to labels having insufficient sample vectors.

### SUMMARY

In the conventional technique described above, it is not guaranteed that a learning model is trained with added training data so that the learning model accurately classifies unknown data. Therefore, there is a problem that there may be a case where improvement of generalization ability of classification is not expected.

Accordingly, it is an object in one aspect of an embodiment of the invention to provide a learning method, a computer-readable recording medium, and a learning apparatus for enabling improvement of generalization ability of classification.

According to an aspect of an embodiment, a computer-implemented machine learning method of a machine learning model includes: performing first training of the machine learning model by using pieces of training data associated with a correct label; determining, from the pieces of training data, a set of pieces of training data that are close to each other in a feature space based on a core tensor generated by the trained machine learning model and have a same correct label; generating extended training data based on the determined set of pieces of training data; and performing second training of the trained machine learning model by using the generated extended training data.

It is to be understood that both the foregoing general description and the following detailed description are exemplary, and are intended to provide further explanation of the invention as claimed. Other advantages and features of the invention will be apparent from the following description, drawings and claims.

### BRIEF DESCRIPTION OF DRAWINGS

FIG. 1 is a block diagram illustrating a functional configuration example of a learning apparatus according to an embodiment;
FIG. 2 is an explanatory diagram illustrating an example of data classification;
FIG. 3 is an explanatory diagram illustrating an example of learning in a deep tensor;
FIG. 4 is a flowchart illustrating an operation example of the learning apparatus according to the embodiment;
FIG. 5 is an explanatory diagram explaining a generation example of a distance matrix;
FIG. 6 is an explanatory diagram exemplifying calculation of a redundancy rate and generation of intermediate data;
FIG. 7 is an explanatory diagram exemplifying a calculation procedure of a redundancy rate;
FIG. 8A is an explanatory diagram illustrating a specific example of calculating a redundancy rate;
FIG. 8B is an explanatory diagram illustrating a specific example of calculating a redundancy rate;
FIG. 9 is an explanatory diagram explaining a separation plane made by the learning apparatus according to the embodiment; and
FIG. 10 is a block diagram illustrating an example of a computer that executes a learning program.

### DESCRIPTION OF EMBODIMENT(S)

Preferred embodiments of the present invention will be explained with reference to accompanying drawings. In the embodiments, constituent elements having identical functions are denoted by like reference signs and redundant explanations thereof will be omitted. The learning method, the computer-readable recording medium, and the learning apparatus described in the embodiments are only examples thereof and do not limit the embodiments. Further, the respective embodiments may be combined with each other appropriately in a range without causing any contradiction.

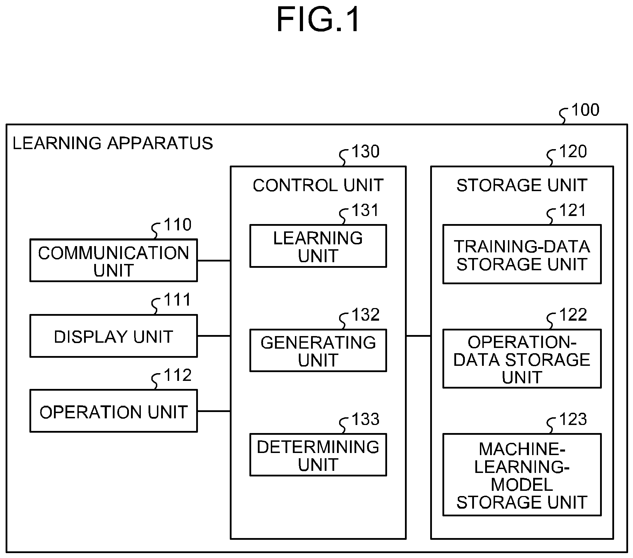

FIG. 1 is a block diagram illustrating a functional configuration example of a learning apparatus according to an embodiment. A learning apparatus 100 illustrated in FIG. 1 performs training of a machine learning model based on a core tensor generated therein. Specifically, the learning apparatus 100 performs training of a machine learning model with pieces of training data having a correct label attached thereto. The learning apparatus 100 determines, from the pieces of training data, a set of training data that are close to each other in a feature space based on the core tensor generated by the trained machine learning model and have the same correct label. The learning apparatus 100 generates, based on the determined set of training data, training data (hereinafter, "extended training data") to be newly added to a training data group separately from the original training data. The learning apparatus 100 performs training of the machine learning model using the generated extended training data. With this learning, the learning apparatus 100 can improve generalization ability of classification in the machine learning model.

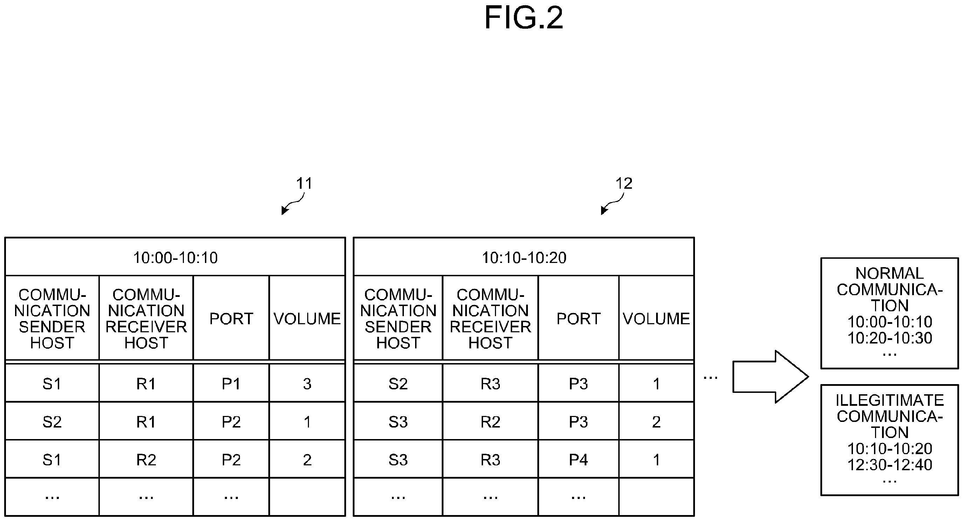

FIG. 2 is an explanatory diagram illustrating an example of data classification. Data 11 and data 12 illustrated in FIG. 2 are graphic structure data in which communication logs are compiled in each predetermined time slot. In the following descriptions, the data 11 and the data 12 represent a relation of information, such as a communication sender host, a communication receiver host, a port number, and a communication volume, recorded in a communication log every 10 minutes. There is a case where it is desired to classify graphic structure data as illustrated in the data 11 and the data 12 into, for example, legitimate communication (normal communication) and illegitimate communication.

In such data classification, training of the machine learning model is performed by using training data having a correct label attached thereto, where the correct label indicates legitimate communication or illegitimate communication. Thereafter, a classification result can be acquired by applying the data 11 and the data 12 to the trained machine learning model.

In the present embodiment, in a campaign analysis in the field of information security, there is mentioned an example of classifying legitimate communication and illegitimate communication based on the data 11 and the data 12 in communication logs. However, the present embodiment is only an example, and the data type to be classified and the classification contents are not limited to this example of the present embodiment. For example, as another example, it is possible to classify a transaction history at the time at which money laundering or a bank transfer fraud has occurred, from data representing a relation of information such as a remitter account, a beneficiary account, and a branch name that are recorded in a bank transaction history.

Further, in classification of graphic structure data, classification by a machine learning model using a graphic structure learning technique that is capable of performing deep learning of graphic structure data (hereinafter, a mode of a device that performs such graphic structure learning is referred to as "deep tensor") is performed.

The deep tensor is deep learning technology in which a tensor based on graphic information is used as an input. In deep tensor, learning of extraction method for core tensor to be input into a neural network is executed, while learning of a neural network is executed. Learning of the extraction method is realized by updating parameters for tensor decomposition of input tensor data in response to updating parameters for the neural network.

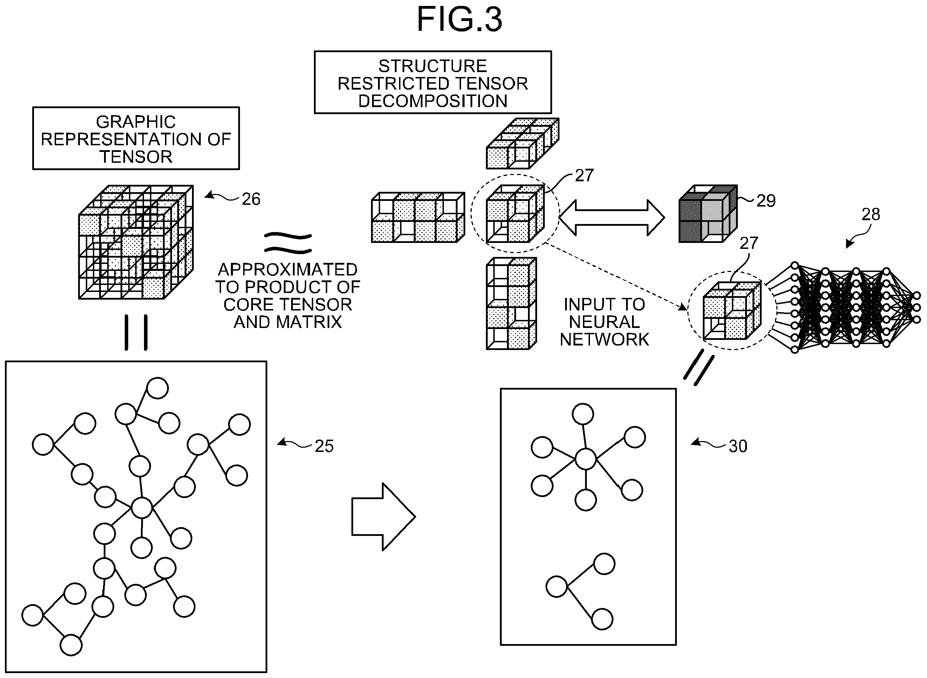

FIG. 3 is a diagram illustrating an example of learning in a deep tensor. As illustrated in FIG. 3, a graph structure 25 representing the entirety of certain graphic structure data can be expressed as a tensor 26. The tensor 26 can be approximated to a product of a core tensor 27 multiplied by a matrix in accordance with structure restricted tensor decomposition based on a target core tensor 29. In the deep tensor, the core tensor 27 is input to a neural network 28 to perform deep learning, and optimization of the target core tensor 29 is performed by an extended error backpropagation method. At this time, when the core tensor 27 is expressed by a graph, a graph 30 representing a partial structure in which features thereof are condensed is obtained. That is, in the deep tensor, the neural network 28 can automatically learn an important partial structure from the entire graph with the core tensor 27.

In the partial structure of the deep tensor, it is guaranteed that a positional relation in the tensors of each piece of training data is an important partial structure for classification. Simultaneously, a relation between pieces of training data by linear transformation is guaranteed. Therefore, when a combination of pieces of training data that are close to each other in the feature space based on the core tensor 27 after learning in the deep tensor have the same correct label, it is guaranteed that the training data located therebetween has the same correct label. In the present embodiment, extended training data is generated, focusing on such a partial structure of the deep tensor.

Specifically, training data is transformed into a feature space based on the core tensor 27 after learning in the deep tensor, and a set of training data that are close to each other in the feature space and have the same correct label is determined in the pieces of training data. Intermediate data is then generated based on the determined set of training data, so as to generate extended training data having the same correct label as that of the set of training data attached thereto. Accordingly, it is possible to generate extended training data for causing a machine learning model to be trained so as to classify unknown data correctly.

Next, a configuration of the learning apparatus 100 is described. As illustrated in FIG. 1, the learning apparatus 100 includes a communication unit 110, a display unit 111, an operation unit 112, a storage unit 120, and a control unit 130. The learning apparatus 100 may also include various known functional units provided in a computer other than the functional units illustrated in FIG. 1, for example, functional units such as various types of input devices and voice output devices.

The communication unit 110 is realized by an NIC (Network Interface Card), for example. The communication unit 110 is a communication interface that is connected to other information processing devices in a wired or wireless manner via a network (not illustrated) and controls communication of information with the other information processing devices. The communication unit 110 receives training data for learning and new data to be determined, for example, from other terminals. Further, the communication unit 110 transmits a learning result and a determination result to other terminals.

The display unit 111 is a display device for displaying various types of information. The display unit 111 is realized by, for example, a liquid crystal display as the display device. The display unit 111 displays various types of screens such as a display screen input from the control unit 130.

The operation unit 112 is an input device that receives various types of operations from a user of the learning apparatus 100. The operation unit 112 is realized by, for example, a keyboard and a mouse as the input device. The operation unit 112 outputs an operation input by a user to the control unit 130 as operation information. The operation unit 112 may be realized by a touch panel or the like as the input device, and a display device of the display unit 111 and the input device of the operation unit 112 can be integrated with each other.

The storage unit 120 is realized by, for example, a semiconductor memory device such as a RAM (Random Access Memory) and a flash memory, or a storage device such as a hard disk or an optical disk. The storage unit 120 includes a training-data storage unit 121, an operation-data storage unit 122, and a machine-learning-model storage unit 123. The storage unit 120 also stores therein information to be used for processing in the control unit 130.

The training-data storage unit 121 stores therein training data to be used as a teacher of a machine learning model. For example, training data acquired by collecting actual data such as communication logs and has a correct label attached thereto where the correct label indicates a correct answer (for example, legitimate communication or illegitimate communication) is stored in the training-data storage unit 121.

The operation-data storage unit 122 stores therein operation data to be used for operations in the control unit 130. For example, the operation-data storage unit 122 stores therein various pieces of data (the core tensor 27, training data and transformed data thereof, a distance matrix, and the like) to be used for an operation at the time of learning a machine learning model and at the time of generating extended training data.

The machine-learning-model storage unit 123 stores therein a trained machine learning model after performing deep learning. Specifically, the machine-learning-model storage unit 123 stores therein, for example, various parameters (weighting coefficients) of a neural network, information of the optimized target core tensor 29, and a tensor decomposition method, as the information related to the trained machine learning model.

The control unit 130 is realized by executing programs stored in an internal storage device by using a RAM as a work area by, for example, a CPU (Central Processing Unit) or an MPU (Micro Processing Unit). Further, the control unit 130 can be realized by an integrated circuit such as an ASIC (Application Specific Integrated Circuit) or an FPGA (Field Programmable Gate Array). The control unit 130 includes a learning unit 131, a generating unit 132, and a determining unit 133, and realizes or executes the information processing functions and actions described below. The internal configuration of the control unit 130 is not limited to the configuration illustrated in FIG. 1, and other configurations can be used so long as the configuration performs information processing described later.

The learning unit 131 is a processing unit that performs learning in a deep tensor based on the training data stored in the training-data storage unit 121 or extended learning data generated by the generating unit 132, so as to generate a trained machine learning model. That is, the learning unit 131 is an example of a first learning unit and a second learning unit.

For example, the learning unit 131 subjects training data to tensor decomposition to generate the core tensor 27 (a partial graphic structure). Subsequently, the learning unit 131 inputs the generated core tensor 27 to the neural network 28 to acquire an output. Next, the learning unit 131 performs learning so that an error in an output value becomes small, and updates parameters of the tensor decomposition so that the decision accuracy becomes high. The tensor decomposition has flexibility, and as the parameters of the tensor decomposition, decomposition models, constraints, and a combination of optimization algorithms can be mentioned. The decomposition models can include, for example, CP (Canonical Polyadic decomposition) and Tucker. Examples of the constraints include, for example, an orthogonal constraint, a sparse constraint, a smooth constraint, and a non-negative constraint. Examples of the optimization algorithms include, for example, ALS (Alternating Least Square), HOSVD (Higher Order Singular Value Decomposition), and HOOI (Higher Order Orthogonal Iteration of tensors). In the deep tensor, tensor decomposition is performed under a constraint that "decision accuracy becomes high".

Upon completion of learning of training data, the learning unit 131 stores the trained machine learning model in the machine-learning-model storage unit 123. As the neural network, various types of neural networks such as an RNN (Recurrent Neural Network) can be used. Further, as the learning method, various types of methods such as the error backpropagation method can be adopted.

The generating unit 132 is a processing unit that generates extended training data based on a set of training data determined by the determining unit 133. For example, the generating unit 132 generates intermediate data, which takes an intermediate value between respective elements of the training data, based on the set of training data determined by the determining unit 133. Subsequently, the generating unit 132 attaches the same correct label as that of the set of training data to the generated intermediate data to generate extended training data.

The determining unit 133 is a processing unit that determines a set of training data that are close to each other in a feature space based on the core tensor 27 generated by the trained machine learning model and have the same correct label, from the pieces of training data in the training-data storage unit 121.

Specifically, the determining unit 133 transforms each piece of training data in accordance with the optimized target core tensor 29 in the machine learning model stored in the machine-learning-model storage unit 123, thereby acquiring transformed training data (hereinafter, "transformed data"). Subsequently, the determining unit 133 calculates a distance between the pieces of transformed data for each of the transformed data so as to decide whether the attached correct label is the same between the pieces of transformed data that are close to each other. Accordingly, a set of training data that are close to each other in a feature space and have the same correct label can be determined.

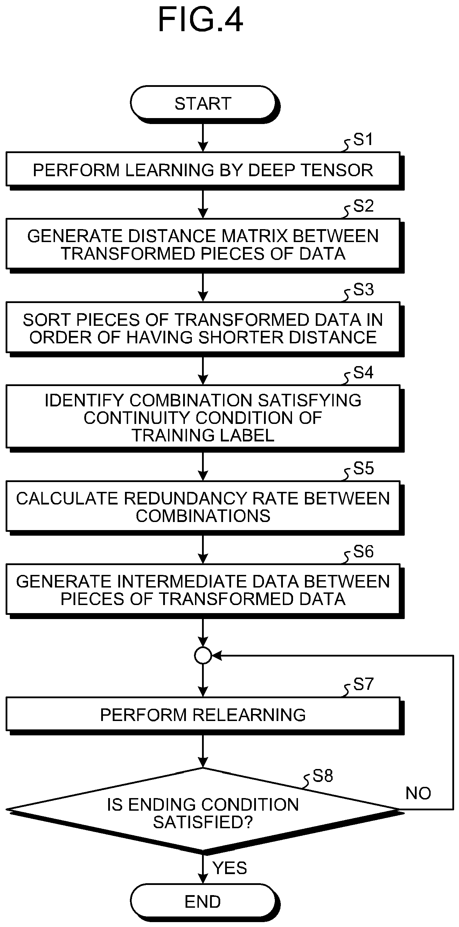

Next, details of processing performed with regard to the learning unit 131, the generating unit 132, and the determining unit 133 are described. FIG. 4 is a flowchart illustrating an operation example of the learning apparatus 100 according to the present embodiment.

As illustrated in FIG. 4, when the processing is started, the learning unit 131 performs training of a machine learning model by a deep tensor, based on the training data stored in the training-data storage unit 121 (S1). Next, the learning unit 131 stores the trained machine learning model in the machine-learning-model storage unit 123.

The determining unit 133 then transforms the each piece of training data stored in the training-data storage unit 121 into a feature space based on the core tensor 27 generated by the trained machine learning model, thereby generating a distance matrix between the pieces of transformed data (S2).

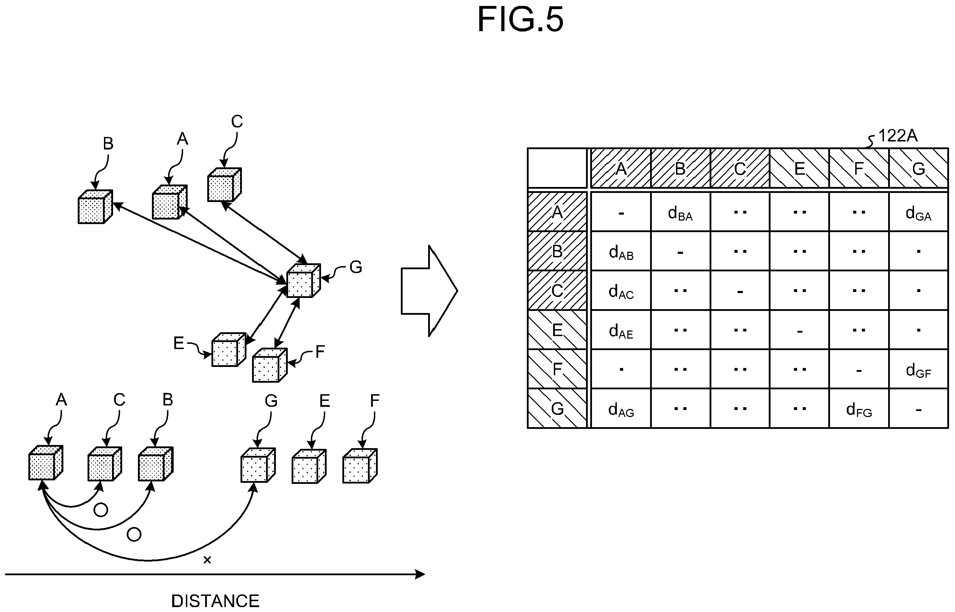

FIG. 5 is an explanatory diagram explaining a generation example of a distance matrix. The upper left part in FIG. 5 illustrates a positional relation in the feature space of the pieces of transformed data A to G, and the lower left part in FIG. 5 illustrates distances between the pieces of transformed data B to G based on the transformed data A. The pieces of transformed data A to C are pieces of data in which training data having a correct label attached thereto, with "illegitimate communication" as a correct answer, is transformed. Further, the pieces of transformed data E to G are pieces of data in which training data having a correct label attached thereto, with "legitimate communication" as a correct answer, is transformed.

As illustrated in FIG. 5, at S2, a distance between the pieces of transformed data is obtained for each of the pieces of transformed data A to G, thereby generating a distance matrix 122A. Specifically, distances d_{AB} to d_{AG} from transformed pieces of data B to G with respect to the transformed data A, ... (omitted) ..., distances d_{GA} to d_{GF} from transformed pieces of data A to F with respect to the transformed data G are obtained, and these distances are stored in the distance matrix 122A. The determining unit 133 stores the generated distance matrix 122A in the operation-data storage unit 122.

Next, the determining unit 133 refers to the distance matrix 122A to sort the pieces of transformed data in order of having a shorter distance for each of the transformed data (S3). For example, as illustrated in the lower left part of FIG. 5, with regard to the transformed data A, the pieces of transformed data are sorted in order of C, B, G, E, and F having a shorter distance, based on the distances d_{AB} to d_{AG} in the distance matrix 122A.

Next, the determining unit 133 identifies a combination of pieces of training data satisfying a continuity condition of a training label (correct label) based on the transformed data sorted in order of having a shorter distance (S4). Subsequently, the determining unit 133 notifies the generating unit 132 of the identified combination of pieces of training data.

For example, as illustrated in the lower left part of FIG. 5, with regard to the training data of the transformed data A, the same correct label is attached to the training data of the pieces of transformed data C and B in order of having a shorter distance. Therefore, a set of training data of the pieces of transformed data A and C and a set of training data of the pieces of transformed data A and B are combinations of training data satisfying the continuity condition. With regard to the transformed data G having a closer distance next to the transformed data C with respect to the transformed data A, a correct label attached to the training data is different from that of the training data of the transformed data A. Therefore, after the transformed data G, the continuity condition is not satisfied. In the example illustrated in FIG. 5, a combination with respect to the training data of the transformed data A is obtained; however, a combination is similarly obtained with respect to the other pieces of transformed data B to G.

Subsequently, the generating unit 132 calculates a redundancy rate in the transformed data of the identified training data, that is, a redundancy rate in the feature space based on the combination of pieces of training data identified by the determining unit 133 (S5). Next, the generating unit 132 generates intermediate data between the pieces of training data with the combination thereof being identified, in a range based on the calculated redundancy rate (S6).

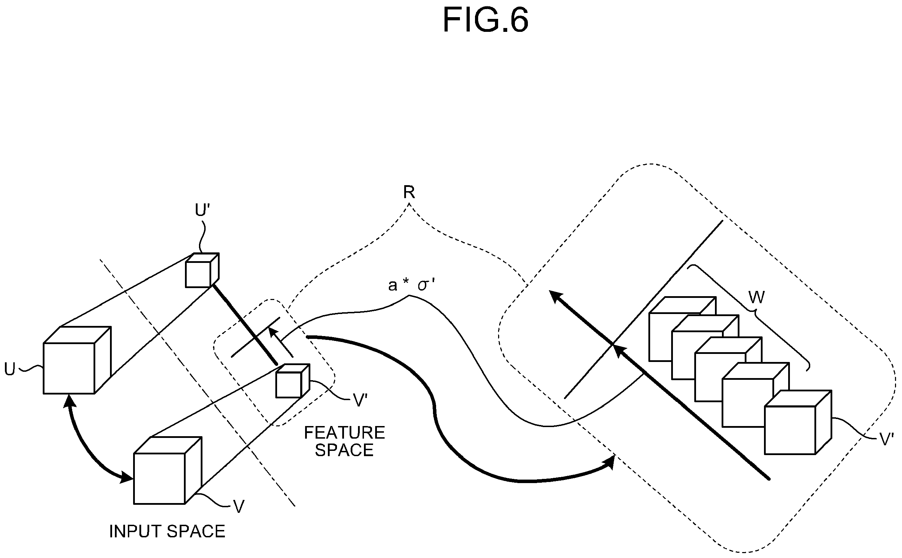

FIG. 6 is an explanatory diagram exemplifying calculation of a redundancy rate and generation of intermediate data. In FIG. 6, U and V represent input data in an input space of a deep tensor, and correspond to a combination of pieces of training data. U' and V' represent transformed data of the pieces of input data U and V in a feature space of the deep tensor. R is a region near the input data V' in the feature space.

As illustrated in FIG. 6, the generating unit 132 calculates a redundancy rate (σ') of core tensors 27 from an element matrix and a redundancy rate based on a redundancy rate (σ) of the pieces of input data U and V, in order to generate intermediate data in a range in which a relation between the pieces of input data U and V can be maintained.

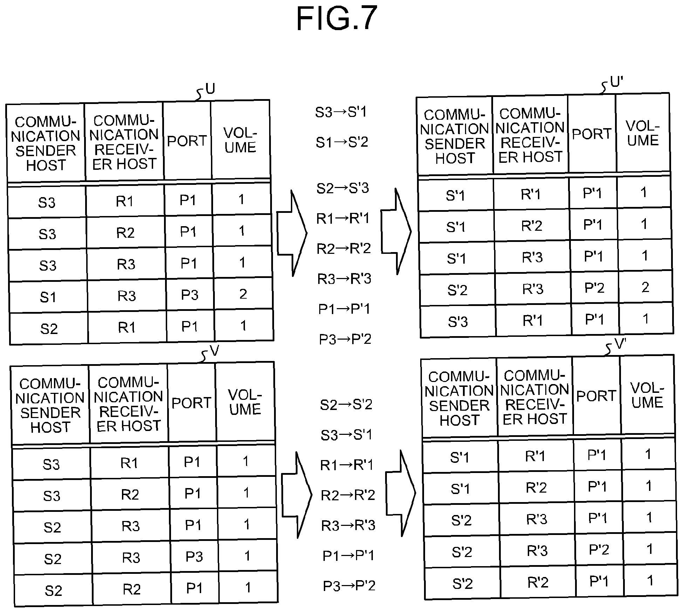

FIG. 7 is an explanatory diagram exemplifying a calculation procedure of a redundancy rate. As illustrated in FIG. 7, the generating unit 132 calculates the redundancy rate (σ) of the pieces of input data U and V based on the redundancy of respective items in the pieces of input data U and V. Specifically, the generating unit 132 calculates the redundancy rate (σ) of the pieces of input data U and V based on a weighted square sum of an item appearing in U, a weighted square sum of an item appearing in U and V, and a weighted square sum of an item appearing in V.

For example, in the illustrated example, the weighted square sum of an item appearing in U is "1^2^{∗}4". The weighted square sum of an item appearing in U and V is "(2+1)^2/2". The weighted square sum of an item appearing in V is "1^2^{∗}5". Therefore, the generating unit 132 calculates σ as σ={1^2^{∗}4+(2+1)^2/2}/{(2^2+1^2^{∗}4)+(1^2^{∗}5)}.

The generating unit 132 then calculates the redundancy rate (σ') of the core tensors 27 from the element matrix and the redundancy rate in the pieces of input data U and V, and decides a range capable of generating intermediate data W based on the calculated redundancy rate (σ'). For example, the generating unit 132 generates the intermediate data W in a range of a distance (a^{∗}σ') obtained by multiplying σ' by a predetermined weighting factor (a), toward a direction between the pieces of input data U' and V'.

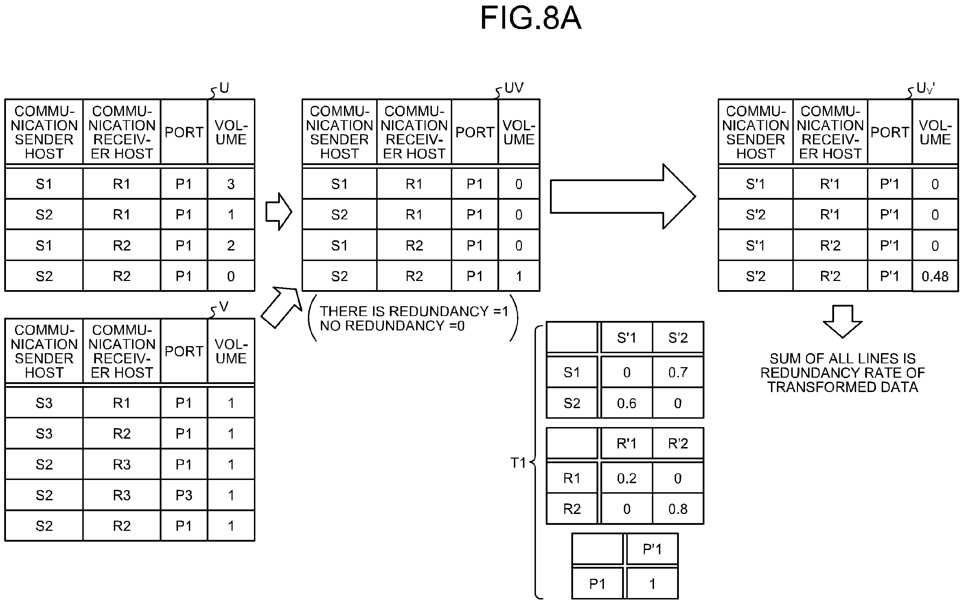

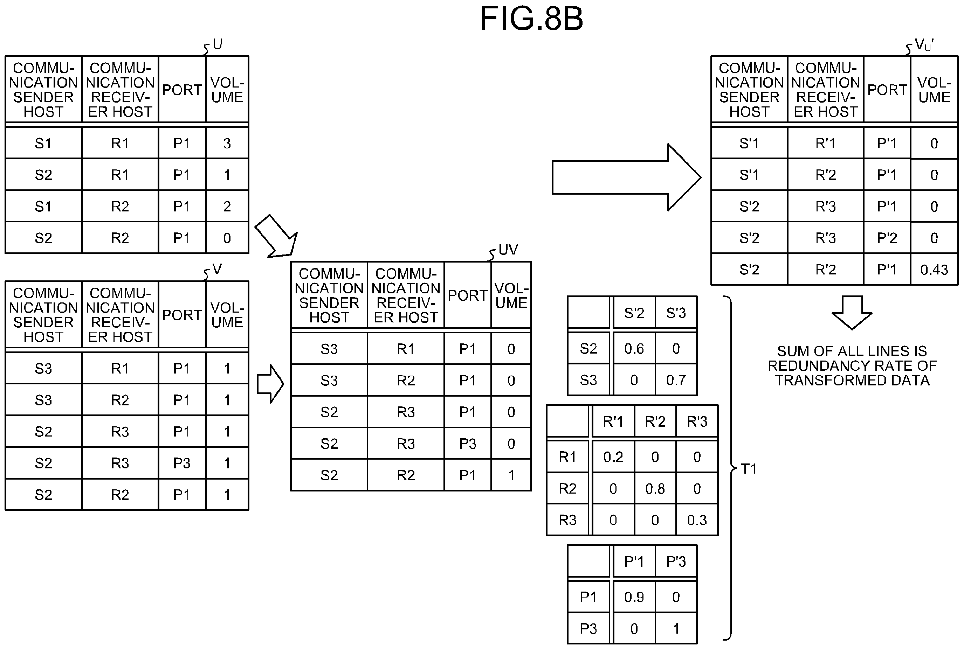

FIG. 8A and FIG. 8B are explanatory diagrams respectively illustrating a specific example of calculating the redundancy rate (σ'). FIG. 8A illustrates a calculation example of the redundancy rate of transformed data (U_{V}') as viewed from U, and FIG. 8B illustrates a calculation example of the redundancy rate of transformed data (V_{U}') as viewed from V. Input data UV is input data transformed based on the redundancy of U and V. A transformation table T1 is a transformation table related to transformation from an input space to a feature space.

As illustrated in FIG. 8A and FIG. 8B, at the time of calculation of the redundancy rate (σ'), the generating unit 132 acquires the input data UV by transforming the original pieces of input data U and V into "amount" representing the presence or absence of redundancy, with regard to each line. Subsequently, the generating unit 132 multiplies the acquired input data UV by the transformation table T1 to generate transformed data (U_{V}', V_{U}') in which redundancy is taken into consideration.

Subsequently, the generating unit 132 obtains a redundancy rate of the transformed data (U_{V}', V_{U}'). Specifically, the sum of the amounts of respective lines is the redundancy rate after transformation, and the redundancy rate of U_{V}' becomes {0.48+0^{∗}3}=0.48. Further, the redundancy rate of V_{U}' becomes {0.43+0^{∗}4}=0.43. Next, the generating unit 132 uses a smaller redundancy rate, that is, 0.43 as the redundancy rate σ'.

Referring back to FIG. 4, after Step S6, the learning unit 131 performs relearning in the deep tensor, with the intermediate data W generated by the generating unit 132 as extended learning data (S7). Subsequently, the learning unit 131 decides whether a predetermined ending condition is satisfied (S8). As the ending condition at S8, for example, as to whether convergence to a predetermined value or loops equal to or more than a predetermined number of times have been performed is mentioned.

When the ending condition is not satisfied (NO at S8), the learning unit 131 returns processing to S7, and performs relearning by training data including extended training data. When the ending condition is satisfied (YES at S8), the learning unit 131 ends the processing.

As described above, the learning apparatus 100 that performs training of a machine learning model having the core tensor 27 generated therein includes the learning unit 131, the determining unit 133, and the generating unit 132. The learning unit 131 refers to the training-data storage unit 121 to perform training of the machine learning model by training data having a correct label attached thereto (FIG. 4: S1). The determining unit 133 determines a set of training data that are close to each other in a feature space based on the core tensor 27 generated by the trained machine learning model and have the same correct label, from the pieces of training data of the learning unit 131 (FIG. 4: S4). The generating unit 132 generates extended training data based on the determined set of training data (FIG. 4: S6). The learning unit 131 performs training of the machine learning model using the generated extended training data (FIG. 4: S7).

As described above, in the learning apparatus 100, learning is performed by adding training data based on a set of training data, whose relationship is guaranteed in a feature space based on the core tensor 27 of a machine learning model. Therefore, the machine learning model can be trained so as to classify unknown data correctly. That is, the learning apparatus 100 can improve generalization ability of classification.

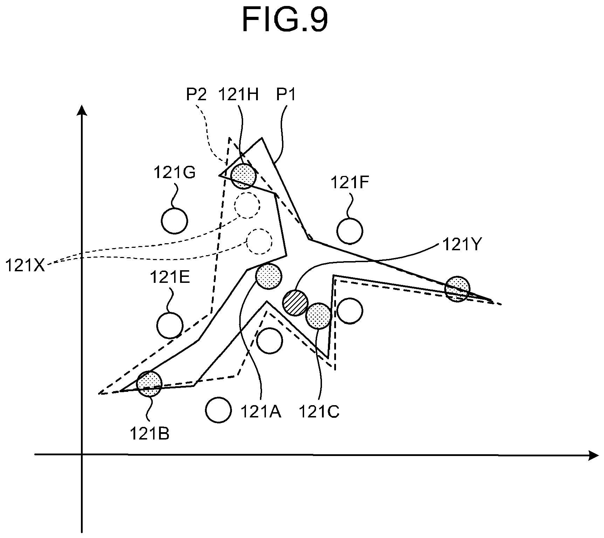

FIG. 9 is an explanatory diagram explaining a separation plane made by the learning apparatus 100 according to the present embodiment. FIG. 9 illustrates a distribution of training data when predetermined items are plotted on an X axis and a Y axis, and coordinate positions 121A to 121H respectively correspond to pieces of training data (A to H). The pieces of training data (A to G) correspond to the pieces of transformed data A to G in FIG. 5, and it is assumed that the correct label same as that of FIG. 5 are attached thereto. That is, the coordinate positions 121A to 121C correspond to pieces of training data (A to C) having a correct label with "illegitimate communication" as a correct answer attached thereto. Further, the coordinate positions 121E to 121G correspond to pieces of training data (E to G) having a correct label with "legitimate communication" as a correct answer attached thereto.

Further, it is assumed that the training data (H) has a correct label with "illegitimate communication" as a correct answer attached thereto, similarly to the pieces of training data (A to C). Note that the transformed data (H) of the training data (H) is assumed to be farther than the transformed data G with respect to the transformed data A in a feature space.

The learning apparatus 100 generates extended training data with "illegitimate communication" as a correct answer at an intermediate coordinate position 121Y or the like in a set of training data, whose relationship is guaranteed in the feature space based on the core tensor 27 of the machine learning model, for example, in the set of training data (A, C).

Even in the set of training data (A, H) having the same correct label, if there is training data (for example, G) having a different correct label therebetween in a feature space, a combination whose relationship is guaranteed is not provided. Therefore, the learning apparatus 100 does not generate extended training data with "illegitimate communication" as a correct answer at an intermediate coordinate position 121X in the set of training data (A, H). At the coordinate position 121X, extended training data with "legitimate communication" as a correct answer is generated by a set of training data (G, F) with "legitimate communication" as a correct answer. Therefore, the separation plane in the machine learning model by the learning performed by the learning apparatus 100 becomes as indicated by P1.

Meanwhile, when extended training data is generated by an arbitrary set of training data (for example, a set of A and H), there is a case where extended training data with "illegitimate communication" as a correct answer is generated at the coordinate position 121X. The separation plane made by learning using such extended training data becomes as indicated by P2.

As is obvious from the comparison between the separation planes P1 and P2, unknown data corresponding to near the coordinate position 121X can be classified correctly by the separation plane P1, but is erroneously classified by the separation plane P2. In this manner, in the machine learning model trained by the learning apparatus 100, generalization ability of classification is improved.

The generating unit 132 generates extended training data having the same correct label attached thereto based on a set of training data having the same correct label. Therefore, the extended training data can be generated so as to properly fill a space between the pieces of original training data.

The generating unit 132 generates extended training data in a range based on the redundancy rate in a feature space of a set of training data. Therefore, it is possible to generate extended training data in which sameness with respect to the feature space is guaranteed.

In the embodiment described above, there has been exemplified a configuration in which extended training data is generated from a set of training data, whose relationship is guaranteed in a feature space based on the core tensor 27 of a machine learning model. However, it is also possible to configure that the learning apparatus 100 generates extended training data from arbitrary training data, and extended training data related to the set of training data, whose relationship is guaranteed in a feature space based on the core tensor 27 of a machine learning model, is adoptable for relearning from the generated pieces of extended training data.

Specifically, the generating unit 132 generates pieces of extended training data from arbitrary training data, by referring to the training-data storage unit 121. Subsequently, the determining unit 133 determines that the extended training data related to a set of training data, whose relationship is guaranteed in a feature space based on the core tensor 27 generated by the trained machine learning model, is adoptable with respect to each of the pieces of extended training data generated by the generating unit 132.

Specifically, the determining unit 133 transforms each piece of training data stored in the training-data storage unit 121 and extended training data generated by the generating unit 132 into the feature space based on the core tensor 27 generated by the trained machine learning model. Next, the determining unit 133 determines whether the extended training data is adoptable based on the positional relationship of the each piece of training data and extended training data after being transformed into the feature space. More specifically, similarly to the embodiment described above, the determining unit 133 determines that the extended training data is adoptable when sequences of the each piece of training data and extended training data in the feature space satisfy a continuity condition.

For example, in the example of FIG. 5, if there is transformed data of extended training data having the same correct label attached thereto between the pieces of transformed data A and C of training data having a correct label with "illegitimate communication" as a correct answer attached thereto, this extended training data is determined as adoptable.

As described above, the determining unit 133 determines whether each piece extended training data generated from training data is adoptable as training data of a machine learning model by using the core tensor 27 generated by a trained machine learning model. The learning unit 131 performs training of the machine learning model using the extended training data, based on a determination result of the determining unit 133. Specifically, the learning unit 131 performs learning by using extended training data having been determined as adoptable by the determining unit 133.

In this manner, similarly to the embodiment described above, when relearning is performed, the pieces of extended training data whose relationship is guaranteed in a feature space based on the core tensor 27 are adoptable for the relearning. Therefore, the machine learning model can be trained so as to classify unknown data correctly.

In the embodiment described above, an RNN is mentioned as an example of a neural network. However, the neural network is not limited thereto. For example, various types of neural networks such as a CNN (Convolutional Neural Network) can be used. As the learning method, various types of known methods can be employed other than the error backpropagation method. Further, the neural network has a structure having a multistage configuration formed of, for example, an input layer, an intermediate layer (a hidden layer), and an output layer, and each layer has a structure in which a plurality of nodes are respectively connected to one another with an edge. Each layer has a function referred to as "activating function", the edge has a "weight", and the value of each node is calculated based on the value of a node in the former layer, the weight value of the connection edge, and the activating function of each layer. As the calculation method, various types of known methods can be employed. Further, as machine learning, other than a neural network, various types of methods such as an SVM (Support Vector Machine) may be used.

Respective constituent elements of respective units illustrated in the drawings do not necessarily have to be configured physically in the way as illustrated in the drawings. That is, the specific mode of distribution and integration of respective units is not limited to the illustrated ones and all or a part of these units can be functionally or physically distributed or integrated in an arbitrary unit, according to various kinds of load and the status of use. For example, the learning unit 131 and the generating unit 132 or the generating unit 132 and the determining unit 133 may be integrated with each other. Further, the performing order of the processes illustrated in the drawings is not limited to the order described above, and in a range without causing any contradiction on the processing contents, these processes may be performed simultaneously or performed as the processing order is changed.

Further, all or an arbitrary part of various processing functions executed by the respective devices may be executed on a CPU (or a microcomputer such as an MPU or an MCU (Micro Controller Unit)). It is needless to mention that all or an arbitrary part of the various processing functions may be executed on a program analyzed and executed by a CPU (or a microcomputer such as an MPU or an MCU) or on hardware based on wired logic.

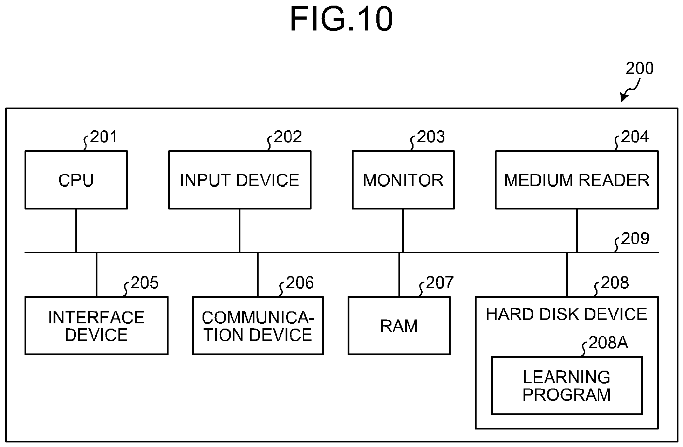

Various types of processes explained in the embodiments described above can be realized by executing a program prepared beforehand with a computer. Therefore, an example of a computer that executes a program having the same functions as those of the respective embodiments described above is described. FIG. 10 is a diagram illustrating an example of a computer that executes a learning program.

As illustrated in FIG. 10, a computer 200 includes a CPU 201 that performs various types of arithmetic processing, an input device 202 that receives a data input, and a monitor 203. The computer 200 also includes a medium reader 204 that reads programs and the like from a recording medium, an interface device 205 that connects the computer 200 with various types of devices, and a communication device 206 that connects the computer 200 with other information processing devices in a wired or wireless manner. Further, the computer 200 includes a RAM 207 that temporarily stores therein various types of information, and a hard disk device 208. The devices 102 to 108 are connected to a bus 209.

The hard disk device 208 stores therein a learning program 208A having the same functions as those of the processing units illustrated in FIG. 1, which are the learning unit 131, the generating unit 132, and the determining unit 133. Further, the hard disk device 208 stores therein various pieces of data for realizing the training-data storage unit 121, the operation-data storage unit 122, and the machine-learning-model storage unit 123. The input device 202 receives, for example, an input of various types of information such as operating information from a manager of the computer 200. The monitor 203 displays thereon, for example, various types of screens such as a display screen to the manager of the computer 200. The interface device 205 is connected with, for example, a printing device. The communication device 206 has, for example, the same functions as those of the communication unit 110 illustrated in FIG. 1, and is connected with a network (not illustrated) to transmit and receive various pieces of information with other information processing devices.

The CPU 201 reads the learning program 208A stored in the hard disk device 208, and executes the program by loading the program in the RAM 207, thereby performing various types of processing. These programs can cause the computer 200 to function as the learning unit 131, the generating unit 132, and the determining unit 133 illustrated in FIG. 1.

The learning program 208A described above does not always need to be stored in the hard disk device 208. For example, it is possible to configure that the computer 200 reads the learning program 208A stored in a storage medium that is readable by the computer 200 and executes the learning program 208A. The storage medium that is readable by the computer 200 corresponds to a portable recording medium such as a CD-ROM, a DVD (Digital Versatile Disc), or a USB (Universal Serial Bus) memory, a semiconductor memory such as a flash memory, and a hard disk drive, for example. It is also possible to configure that the learning program 208A is stored in a device connected to a public line, the Internet, a LAN, or the like and the computer 200 reads the learning program 208A therefrom and executes it.

According to an embodiment of the present invention, it is possible to improve generalization ability of classification.

## Claims

1. A computer-implemented machine learning method of a machine learning model comprising:
Performing(S1) first training of the machine learning model by using pieces of training data associated with a correct label;
Determining(S3,S4), from the pieces of training data, a set of pieces of training data that are close to each other in a feature space based on a core tensor generated by the trained machine learning model and have a same correct label;
Generating(S6) extended training data based on the determined set of pieces of training data; and
Performing(S7) second training of the trained machine learning model by using the generated extended training data.

2. The learning method according to claim 1, wherein the generating includes generating, based on the set of pieces of training data associated with the correct label, the extended training data associated with the correct label.

3. The learning method according to claim 1, wherein the generating includes generating the extended training data in accordance with a range based on a redundancy rate of the determined set of pieces of training data in the feature space.

4. A machine learning program causing a computer to perform:
Performing(S1) first training of the machine learning model by using pieces of training data associated with a correct label;
Determining(S3,S4), from the pieces of training data, a set of pieces of training data that are close to each other in a feature space based on a core tensor generated by the trained machine learning model and have a same correct label;
Generating(S6) extended training data based on the determined set of pieces of training data; and
Performing(S7) second training of the trained machine learning model by using the generated extended training data.

5. The machine learning program according to claim 4, wherein the generating includes generating, based on the set of pieces of training data associated with the correct label, the extended training data associated with the correct label.

6. The machine learning program according to claim 4, wherein the generating includes generating the extended training data in accordance with a range based on a redundancy rate of the determined set of pieces of training data in the feature space.

7. A machine learning apparatus comprising:
a first training unit that performs first training of the machine learning model by using pieces of training data associated with a correct label;
a determining unit that performs, on a basis of a core tensor generated by the trained machine learning model, determination of whether each extended training data generated from the pieces of training data is adoptable as training data of the trained machine learning model; and
a second training unit that performs second training of the trained machine learning model by using the extended training data in accordance with a result of the determination.

8. The machine learning apparatus according to claim 7, wherein the second training unit performs when the result indicates that the extended training is adoptable.

9. The machine learning apparatus according to claim 7, wherein the determining unit performs on a basis of positions of the training data and the extended training data in a feature space based on a core tensor generated by the trained machine learning model.
